# FASCICULE DE BREVET EUROPEEN

(11) **EP 0 737 561 B1**
(45) Date de publication et mention de la délivrance du brevet: **25.08.1999**
(21) Numéro de dépôt: 96400787.6
(22) Date de dépôt: 12.04.1996
(51) Int. Cl.: B29C 47/00, B29C 47/06, B29C 47/20

(54) **Dispositif d'extrusion pour pièces profilées bicouches**
Extrusionsdüse für Zweischichtprofilen
Extrusion die for two-layer profiles

(30) Priorité: 14.04.1995 FR 9504535
(43) Date de publication de la demande: 16.10.1996
(73) Titulaire: GROSFILLEX S.A.R.L. Société à responsabilité limitée dite:, 01100 Oyonnax (FR)
(72) Inventeur: Grosset, Jean-Claude, 01100 Oyonnax (FR); Berrod, Roland, 01100 Oyonnax (FR)
(74) Mandataire: Dronne, Guy

(56) Documents cités:
- EP-A- 0 435 786
- EP-A- 0 548 549
- DE-A- 2 265 035
- DE-A- 3 616 444
- US-A- 4 189 520
- PLASTICS ENGINEERING, vol. 37, no. 9, Septembre 1981, MANCHESTER, NEW HAMPSHIRE, USA, pages 25-29, XP002008269 RANDY J. BROWN & JAMES W. SUMMERS: "Designing profile dies for coextrusion"

## Description

La présente invention concerne un dispositif d'extrusion pour réaliser une pièce profilée creuse présentant un contour externe qui, en section droite, comporte une pluralité de segments, et comprenant une portion interne réalisée dans une première matière plastique et au moins une couche externe, réalisée dans une deuxième matière plastique et s'étendant sur au moins une partie, dite "partie recouverte", dudit contour externe.

Pour de nombreuses applications, par exemple pour les profilés de fenêtres ou d'huisseries, il est nécessaire que l'aspect extérieur du profilé réponde à des critères de qualité particulièrement exigeants. Par exemple, lorsque l'on souhaite réaliser des profilés colorés, il est nécessaire que la coloration soit bien préservée dans le temps. Dans la mesure où les pigments colorés courants ne résistent pas suffisamment longtemps aux intempéries ou à la lumière, cette nécessité impose l'utilisation de pigments particulièrement résistants, donc d'un prix de revient nettement plus élevé. Utiliser de tels pigments dans les profilés monocouche classiques, dans lesquels les pigments sont non seulement visibles en surface, mais également noyés dans l'épaisseur, constitue une solution économiquement désavantageuse puisque la plus grande partie des pigments, dont le coût est élevé, n'est pas visible.

Il s'avère par conséquent nécessaire de fabriquer des profilés dont la portion interne est réalisée dans une première matière plastique peu coûteuse, tandis que seule la couche externe contient les pigments colorés et est réalisée dans une deuxième matière plastique plus onéreuse.

Notons que le problème de la coloration évoqué ci-dessus n'est qu'un exemple d'application et que, de manière générale, il peut s'avérer intéressant de fabriquer des profilés dont l'intérieur est réalisé dans une première matière plastique, tandis que la couche externe est réalisée dans une deuxième matière plastique différente. Ainsi, la première matière plastique peut être constituée par du plastique recyclé, tandis que la deuxième matière plastique est de meilleure qualité. Les deux matières plastique peuvent également se distinguer l'une de l'autre par leurs propriétés mécaniques. Elles doivent toutefois être compatibles.

Notons encore que l'on peut souhaiter ne recouvrir que certaines faces du profilé, par exemple les faces qui seront visibles lorsque le profilé sera mis en place.

On connaît, par la demande de brevet européen n° 0 435 786, un dispositif d'extrusion comprenant :
- un premier canal d'entrée,
- une première extrudeuse destinée à alimenter le premier canal d'entrée avec une première matière plastique fondue,
- un corps comportant, successivement disposés axialement dans le sens de l'écoulement de ladite première matière plastique, un canal intermédiaire raccordé au premier canal d'entrée et un canal d'extrusion dont la paroi présente plusieurs facettes longitudinales servant à définir le contour externe de la pièce profilée,
- un noyau axial d'extrusion présentant un premier tronçon disposé dans le canal intermédiaire et un deuxième tronçon disposé dans le canal d'extrusion, l'espace ménagé entre ledit deuxième tronçon et la paroi du canal d'extrusion servant à définir la forme de la pièce profilée, dont le deuxième tronçon du noyau définit le contour interne et dont la paroi du canal d'extrusion définit le contour externe,
- un deuxième canal d'entrée ayant une entrée et présentant une extrémité de sortie raccordée au canal d'extrusion, et
- une deuxième extrudeuse destinée à alimenter le deuxième canal d'entrée avec une deuxième matière plastique fondue.

Le dispositif comporte des moyens pour régler le flux de la deuxième matière plastique dans le deuxième canal d'entrée et pour déterminer, à l'extrémité de sortie de ce dernier, une répartition homogène de ladite deuxième matière plastique sur ladite partie recouverte du contour externe de la pièce profilée. Il comporte, en outre, une pièce creuse intérieure présentant un évidement traversant à travers lequel passe le noyau d'extrusion et une pièce creuse extérieure susceptible de s'emboîter sur ladite pièce creuse intérieure, ces pièces ménageant entre elles, lorsqu'elles sont emboîtées, un canal de diffusion pour la deuxième matière plastique. Ce canal constitue une partie du deuxième canal d'entrée, et comprend une première partie ayant la forme de deux demi-spires d'hélice, symétriques par rapport à un plan de symétrie de la périphérie externe de la pièce creuse intérieure et se rejoignant dans ce plan à leurs deux extrémités pour former une gorge de coulée continue, la première zone de jonction des demi-spires étant située vers l'arrière par rapport à la deuxième zone de jonction et étant directement raccordée à l'entrée du deuxième canal d'entrée.

Le canal de diffusion comprend, en outre, une deuxième partie, s'étendant entre la gorge de coulée et l'extrémité avant dudit canal et constituée par l'espace intersticiel ménagé entre les faces en regard de la périphérie externe de la pièce intérieure et la périphérie interne de la pièce extérieure.

Les dispositifs connus de ce type ne permettent pas de réaliser des profilés "bi-couches" de forme relativement complexe, par exemple du type utilisé pour les huisseries ou les entourages de fenêtres, c'est-à-dire dont le contour présente une pluralité de segments et n'a pas simplement la forme d'une courbe circulaire ou pratiquement circulaire. En effet si l'on tente, en changeant la buse d'extrusion, d'utiliser ces dispositifs pour réaliser de tels profilés complexes, les deux matières plastiques se mélangent de façon pratiquement aléatoire et les pièces profilées obtenues comportent des parties importantes sur lesquelles seule l'une des deux matières plastiques est présente.

En fait, de tels dispositifs connus sont seulement utilisables pour des profilés de forme très simple, présentant globalement une symétrie axiale.

La présente invention se propose de remédier à ces inconvénients et vise à permettre la fabrication de pièces profilées dont la portion interne définit effectivement le coeur ou le noyau du profil, et dont la couche externe qui recouvre ce coeur a l'épaisseur souhaitée et est présente sur la totalité du contour ou, tout au moins, sur toutes les parties du contour sur lesquelles elle est nécessaire et souhaitée.

Ce but est atteint grâce au fait que la pièce creuse intérieure comporte une partie d'extrémité avant présentant une face avant qui s'étend sensiblement radialement entre l'extrémité avant du canal de diffusion et le canal d'extrusion,
que le dispositif comporte une pièce avale munie d'un perçage traversant dont le contour constitue, au moins sur un tronçon axial, la paroi du canal d'extrusion, ladite pièce avale présentant une face arrière, sensiblement radiale et située en regard de la face avant de ladite partie d'extrémité avant,
que le deuxième canal d'entrée comporte une portion de réglage constituée par l'espace ménagé entre la face arrière de la pièce avale et la face avant de la partie d'extrémité avant, et
que cette portion de réglage présente des variations de sa section constituant des moyens pour, à partir d'un débit de deuxième matière plastique sensiblement uniforme sur l'extrémité avant du canal de diffusion, régler la vitesse d'écoulement de la deuxième matière plastique, vers une facette donnée de la paroi du canal d'extrusion, en fonction de la distance mesurée selon le chemin d'écoulement de la deuxième matière plastique, entre l'entrée de la portion de réglage et ladite facette, les variations de la section de la portion de réglage étant réalisées à l'aide d'au moins une zone renflée, équipant au moins l'une des faces entre lesquelles est ménagée la portion de réglage et diminuant localement la section de cette dernière.

Grâce à ces dispositions, la deuxième matière plastique se répartit régulièrement pour former la couche externe de la pièce profilée, et toutes les zones de cette pièce que l'on souhaite effectivement recouvrir par la couche externe sont recouvertes de façon homogène.

Il peut arriver que l'on souhaite que certaines parties de la pièce profilée ne soient pas recouvertes par la deuxième matière plastique. Si ces parties sont des faces de profilé, on peut aménager le deuxième canal d'entrée de manière qu'il ne débouche pas sur ces faces, en fermant les tronçons de l'extrémité de sortie de ce canal qui correspondent à ces faces.

Si ces parties sont des zones plus petites, telles que de simples rainures ou gorges, on peut aménager la buse d'extrusion de telle sorte qu'elle présente une conformation légèrement différente de celle du canal d'extrusion à l'endroit du raccordement du deuxième canal d'entrée avec ce canal d'extrusion, par exemple en rapportant de nouvelles nervures, en vue de réaliser, sur la pièce profilée, des gorges exemptes de revêtement. Ces gorges peuvent être des parties non visibles du profilé dans lesquelles, par exemple dans le cas d'un profilé pour encadrement de fenêtre, on viendra ensuite disposer un joint d'étanchéité.

Pour réaliser des pièces profilées comprenant n (n supérieur à 1) couches externes (par exemple différentes couleurs sur diverses parties du contour externe, ou plusieurs couches superposées, de caractéristiques mécaniques différentes), on peut équiper le dispositif de n+1 canaux d'entrée, c'est-à-dire des premier et deuxième canaux d'entrée précédemment évoqués, et de n-1 autres canaux d'entrée, de conformation globalement analogue à celle du deuxième canal d'entrée et dont les extrémités de sortie respectives sont successivement raccordées au canal d'extrusion, dans le sens allant de l'amont vers l'aval.

L'invention concerne également un procédé pour réaliser une pièce profilée creuse du type précédemment cité, dans lequel on met en oeuvre le dispositif d'extrusion selon l'invention, on alimente le premier canal d'entrée avec la première matière plastique fondue, on réalise l'écoulement de cette première matière plastique dans le canal intermédiaire et dans le canal d'extrusion pour extruder la portion interne de la pièce profilée et, à l'aide de la deuxième extrudeuse, on alimente le deuxième canal d'entrée avec la deuxième matière plastique fondue, et on réalise l'écoulement de cette deuxième matière plastique dans le canal d'extrusion sur ladite portion interne de la pièce profilée pour extruder, sur cette portion interne, la couche externe de cette pièce.

L'invention sera bien comprise et ses avantages apparaîtront mieux à la lecture de la description détaillée qui suit, de modes de réalisation indiqués à titre d'exemples non limitatifs. Cette description se réfère aux dessins annexés sur lesquels :
- la figure 1 est une vue en perspective éclatée des pièces principales du dispositif d'extrusion,
- la figure 2 est une coupe axiale du dispositif selon l'invention,
- la figure 3 est une vue en perspective d'une pièce permettant de réaliser le canal de diffusion et la portion de réglage,
- la figure 4 est une vue de face de la pièce de la figure 3,
- la figure 5 est une vue de face de la buse d'extrusion,
- la figure 6 est une section montrant une pièce profilée réalisée à l'aide du dispositif des figures 1 et 2, équipée de la buse de la figure 5,
- la figure 7 est une variante de la figure 5, et
- la figure 8 est une coupe analogue à celle de la figure 2, montrant un dispositif qui, selon une variante, est équipé d'un troisième canal d'entrée.

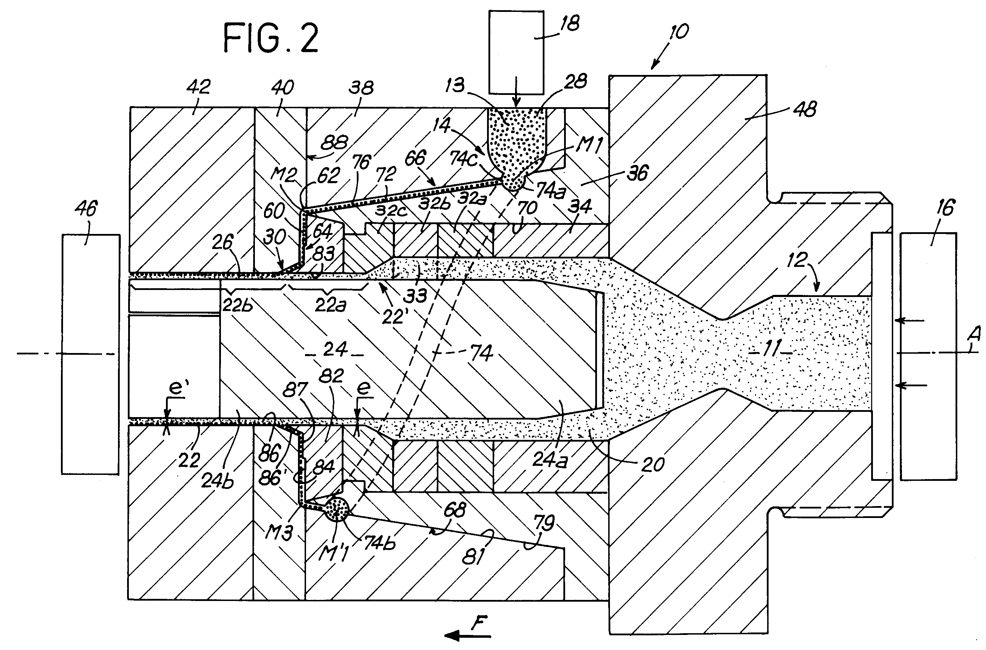

En se reportant tout d'abord à la figure 2, on voit que le dispositif comporte un corps 10, un premier canal d'entrée 12 pour une première matière plastique fondue 11 et un deuxième canal d'entrée 14 pour une deuxième matière plastique fondue 13. Une première et une deuxième extrudeuses, représentées de manière symbolique, et respectivement désignées par les références 16 et 18 sont destinées à alimenter respectivement le premier canal d'entrée avec la première matière plastique fondue et le deuxième canal d'entrée avec la deuxième matière plastique fondue.

Le corps 10 comporte, successivement disposés axialement dans le sens de l'écoulement de la première plastique, indiqué par la flèche F, un canal intermédiaire 20 raccordé au premier canal d'entrée 12 et un canal d'extrusion 22 dont la paroi présente plusieurs facettes longitudinales (non représentées sur la vue en coupe) qui servent à définir le contour externe de la pièce profilée fabriquée à l'aide du dispositif.

Dans toute la suite, les positions des divers éléments (avant, arrière, amont, aval) seront définies par rapport au sens d'écoulement F.

De manière connue en soi, ce dispositif comporte un noyau axial d'extrusion 24 présentant un premier tronçon 24a disposé dans le canal intermédiaire 20 et un deuxième tronçon 24b disposé dans le canal d'extrusion 22. L'espace 26 ménagé entre le deuxième tronçon 24b et la paroi du canal d'extrusion 22 sert à définir la forme de la pièce profilée. Ainsi, le deuxième tronçon du noyau définit le contour interne du profilé et la paroi du canal d'extrusion définit son contour externe.

Le deuxième canal d'entrée 14 présente une entrée 28 raccordée à la deuxième extrudeuse 18 et une extrémité de sortie 30 raccordée au canal d'extrusion 22. Ainsi, la deuxième matière plastique 13 parvient au contact de la première matière plastique lorsque la portion interne de la pièce profilée est déjà définie par le canal et le noyau d'extrusion. En fait, la zone de raccord entre l'extrémité de sortie du deuxième canal d'entrée et le canal d'extrusion peut être située à l'entrée 22' du canal d'extrusion ou, comme c'est le cas dans l'exemple représenté, légèrement en aval de cette entrée, de sorte qu'une première partie 22a du canal d'extrusion est ménagée, dans laquelle la portion interne de la pièce profilée prend sa forme. Dans la deuxième partie 22b de ce canal, les deux couches de la pièce profilée sont présentes.

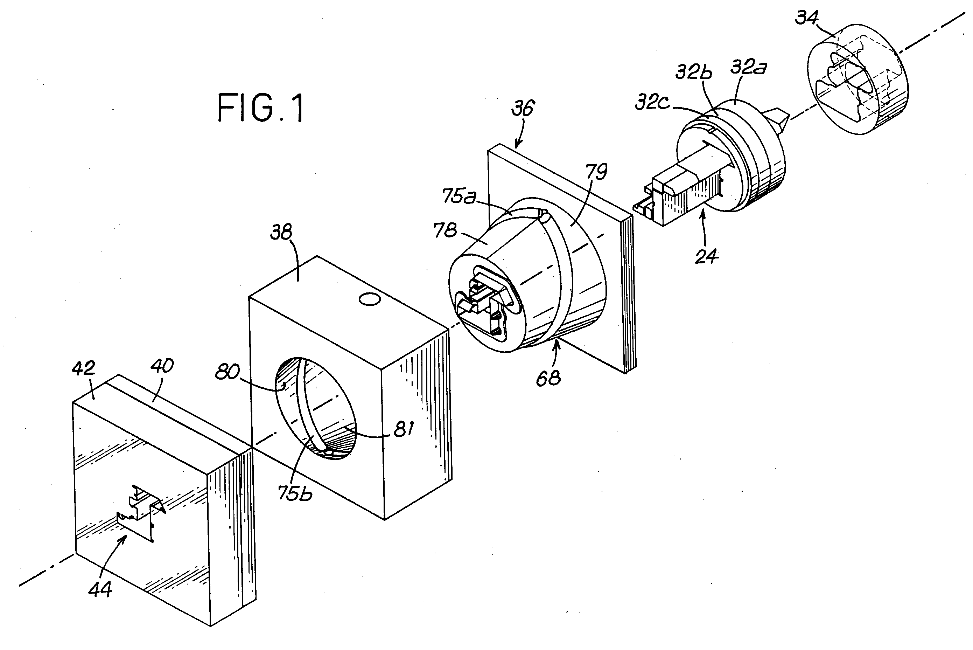

Comme on le comprend au vu de la figure 1, le dispositif d'extrusion est constitué par un assemblage de pièces empilées ou emboîtées, et fixées les unes par rapport aux autres. Ainsi, le noyau d'extrusion 24 est monté dans des bagues indiquées, de l'amont vers l'aval dans le sens d'écoulement F de la première matière plastique, par les références 32a, 32b et 32c.

Une autre bague 34 est montée contre la bague 32a. Le premier tronçon 24a du noyau s'étend sensiblement depuis la bague 34 jusqu'à la bague 32c. Les périphéries internes de ces bagues définissent le canal intermédiaire 20, dont la forme évolue progressivement de l'amont vers l'aval jusqu'à définir sensiblement le contour externe de la pièce profilée.

De même, la forme du premier tronçon 24a du noyau d'extrusion évolue progressivement de l'amont vers l'aval jusqu'à définir le contour interne du profilé. A partir de la bague 32c, le noyau et le canal d'extrusion conservent sensiblement la même forme : celle que l'on souhaite donner à la pièce profilée. Les bagues sont montées à l'intérieur d'une pièce creuse intérieure 36, elle-même emboîtée dans une pièce creuse extérieure 38, que l'on décrira plus précisément dans la suite.

Le noyau d'extrusion est supporté dans le canal d'extrusion par des voiles ou des nervures de support, tels que le voile 33, schématisé en traits interrompus, qui le relie à la périphérie interne de la bague 32b.

A partir de la zone de raccordement du deuxième canal d'entrée avec le canal d'extrusion, la paroi de ce canal est définie par la périphérie interne de deux pièces 40 et 42 fixées l'une à l'autre, l'extrémité de sortie de la pièce aval 42 définissant la buse d'extrusion 44, qui donne sa forme définitive à la pièce profilée. En sortie de cette buse, les éléments aval de la filière d'extrusion, comportant par exemple une unité de calibrage et de refroidissement ainsi qu'un système d'avancement des profilés, sont représentés symboliquement et désignés par la référence 46. Dans l'exemple représenté, une pièce creuse amont 48 est raccordée à la face amont de la pièce interne 36, et munie d'un perçage axial constituant le premier canal d'entrée 12, et raccordée au canal intermédiaire 20.

Le dispositif comporte des moyens pour régler le flux de la deuxième matière plastique 13 dans le deuxième canal d'entrée 14 et pour déterminer, à l'extrémité de sortie 30 de ce dernier, une répartition homogène de cette deuxième matière plastique sur le contour externe de la pièce profilée.

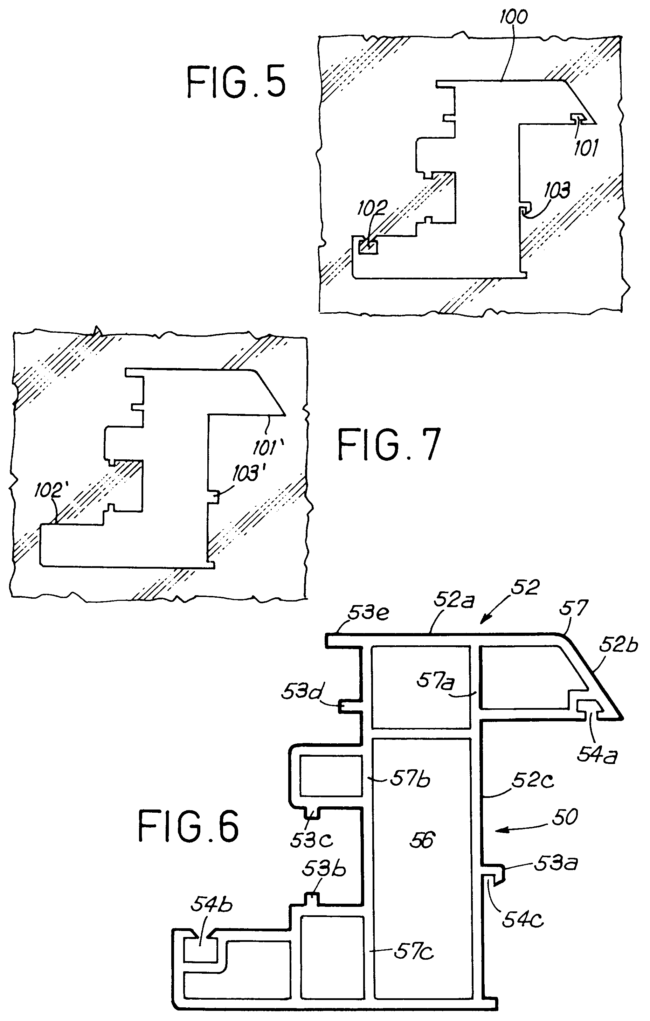

La figure 6 montre la section droite de cette pièce 50. On voit que son contour externe 52 comporte une pluralité de segments inclinés les uns par rapport aux autres et dont, dans un souci de simplification, certains segments seulement sont indiqués par les références numériques 52a, 52b et 52c. Ce contour externe présente également des nervures 53a, 53b, 53c et 53d et des rainures 54a, 54b et 54c.

La portion interne 56 de la pièce profilée 50, qui en constitue l'âme ou le coeur, est réalisée dans la première matière plastique. Elle comporte, de manière connue, des évidements et des voiles de liaison dont seuls certains sont indiqués par les références 57a, 57b ou 57c. Le profilé comporte également une couche externe 57 réalisée dans une deuxième matière plastique. Pour faciliter la représentation, dans la mesure où cette couche externe est fine par rapport à l'épaisseur des différentes parois du profilé, elle est seulement symbolisée par un trait fort. On voit qu'elle s'étend de façon homogène sur pratiquement tout le contour du profilé. Seules certaines zones déterminées en sont exemptes, telles que les rainures 54a, 54b et 54c, ce qui est volontaire et dû à une configuration particulière de la buse d'extrusion, comme on l'expliquera dans la suite.

Le deuxième canal d'entrée 14 comporte une portion de réglage 60 qui présente une entrée 62 et qui est munie de moyens pour régler la vitesse d'écoulement de la deuxième matière plastique 13, vers une facette donnée de la paroi du canal d'extrusion 22, en fonction de la distance, mesurée selon le chemin d'écoulement de la deuxième matière plastique, entre l'entrée 62 de la portion de réglage et cette facette. Le chemin d'écoulement est le trajet que suit la deuxième matière plastique pour aller de l'entrée de la portion de réglage du deuxième canal d'entrée jusqu'à la face du contour de la pièce profilée qu'elle va recouvrir.

Ces moyens pour régler la vitesse d'écoulement sont avantageusement constitués par des variations de la section de la portion de réglage du deuxième canal d'entrée. On voit en effet sur la figure 2 que l'une des parois de la portion de réglage comporte une marche 64 qui diminue la section de cette portion à des endroits déterminés pour réduire, à ces endroits, la vitesse de l'écoulement. Ainsi, la deuxième portion de réglage comporte une première partie de section donnée, sur laquelle la vitesse d'écoulement est sensiblement constante en tous points, et une deuxième partie, de section réduite, sur laquelle la vitesse d'écoulement est ralentie. La conformation de cette deuxième partie est adaptée au contour de la pièce profilée que l'on recouvre à l'aide de la deuxième matière plastique.

On peut éventuellement choisir de réaliser cette portion de réglage sur pratiquement la totalité du deuxième canal d'entrée, de manière à directement régler la vitesse d'écoulement de la deuxième matière plastique entre l'entrée 28 du deuxième canal d'entrée 14 et la pièce profilée.

Toutefois, de manière avantageuse, le deuxième canal d'entrée comporte un canal de diffusion 66 dont la sortie constitue une zone globalement annulaire située autour du canal d'extrusion, et dans laquelle la vitesse de l'écoulement est rendue homogène. La sortie de ce canal de diffusion constitue alors l'entrée de la portion de réglage 60, ce qui permet de faciliter le réglage de la vitesse puisqu'il est effectué à partir d'une vitesse d'écoulement homogène sur tout un contour entourant le profilé. Ainsi, dans l'exemple représenté, la sortie du canal de diffusion est constituée par son extrémité avant sensiblement annulaire, désignée par la référence 62 puisqu'elle constitue également l'entrée de la portion de réglage 60. Le canal de diffusion comporte des moyens pour déterminer un débit de deuxième matière plastique sensiblement uniforme sur cette extrémité avant.

Dans le mode de réalisation représenté, on détermine ce débit sensiblement uniforme en conformant le canal de diffusion en deux parties. Ainsi, la pièce creuse intérieure 36 présente une périphérie externe 68 ayant globalement la forme d'un tronc de cône évasé vers l'arrière, c'est-à-dire dans le sens opposé à la flèche F de la figure 2. Cette pièce 36 comporte un évidement traversant 70, à travers lequel passe le noyau d'extrusion 24. En fait, comme on le voit sur la figure 2, la périphérie interne de cet évidement traversant 70 sert de support aux bagues 34, 32a, 32b et 32c précédemment évoquées, à l'intérieur desquelles se trouve une partie du noyau d'extrusion.

La pièce creuse extérieure 38 est susceptible de s'emboîter sur la pièce creuse intérieure 36 et comporte à cet effet un évidement traversant 72 dans lequel vient se loger la périphérie externe globalement tronconique de la pièce 36. Lorsque ces deux pièces sont ainsi emboîtées, un espace est ménagé entre la périphérie externe 68 de la pièce 36 et la périphérie interne 72 de la pièce 38. Cet espace constitue le canal de diffusion 66. La première partie 74 de ce canal de diffusion est une gorge dans laquelle la deuxième matière plastique s'écoule relativement rapidement, tandis que sa deuxième partie 76 a une section telle que l'écoulement y est plus lent.

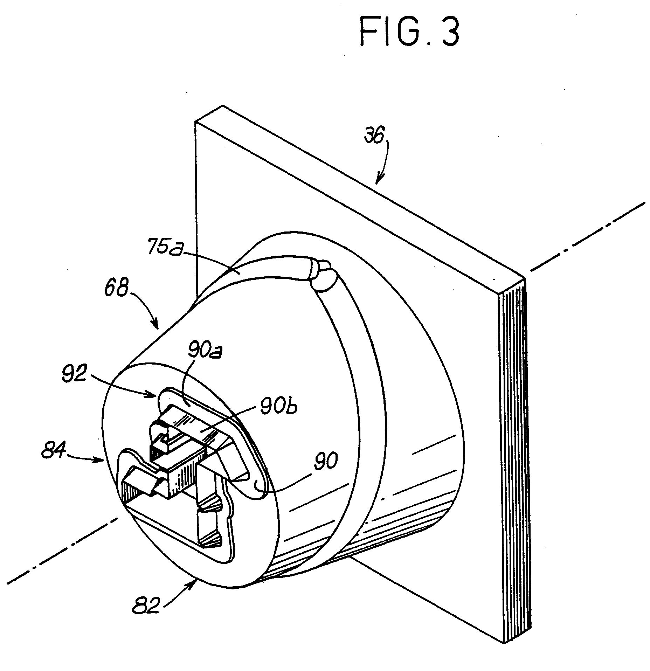

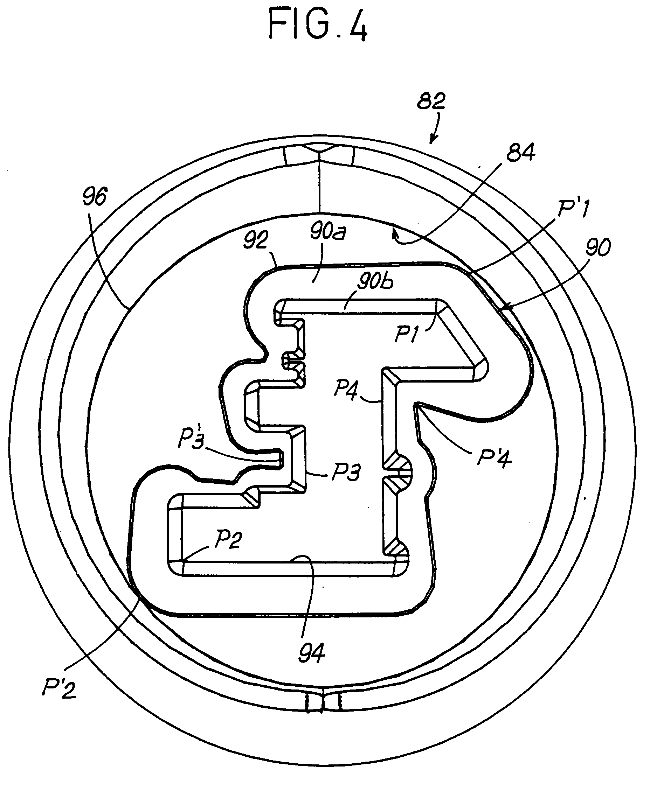

La figure 2 est une coupe axiale passant par l'axe géométrique A du canal d'extrusion. Le plan de coupe constitue un plan de symétrie du tronc de cône correspondant à la forme globale de la périphérie externe 68 de la pièce creuse intérieure 36. Dans ce plan, deux extrémités 74a et 74b de la gorge 74 sont coupées, et la moitié cachée de cette gorge est indiquée par des traits interrompus. On voit ainsi que la moitié de la gorge 74 a la forme d'une demi-spire d'hélice dont la première extrémité 74a, celle qui se trouve située la plus en arrière, est directement raccordée à l'entrée 28 du deuxième canal d'entrée 14. La forme de la deuxième moitié de la gorge 74 se déduit par symétrie par rapport au plan de coupe de la figure 4. En fait, la forme globale de cette gorge est mieux visible sur les figures 1 et 3. Les deux extrémités de chaque demi-spire sont reliées aux deux extrémité de l'autre demi-spire, en des zones de jonction qui correspondent aux extrémités 74a et 74b indiquées sur la figure 2, de telle sorte que la gorge de coulée est continue.

Comme on le voit mieux sur la figure 1, on a réalisé cette gorge de coulée sous la forme d'une première rainure 75a, constituée par deux demi-spires d'hélice, réalisée sur la périphérie externe 68 de la pièce 36, et d'une deuxième rainure 75b, de forme analogue, réalisée sur la périphérie interne 72 de la pièce 38. Lorsque ces deux pièces sont emboîtées, ces deux rainures se trouvent en regard l'une de l'autre et contribuent chacune pour moitié à la section sensiblement circulaire de la gorge 74. On pourrait obtenir une gorge du même type en n'usinant qu'une seule rainure plus profonde sur la périphérie externe 68 de la pièce 36 ou sur la périphérie interne 72 de la pièce 38.

La deuxième partie 76 du canal de diffusion s'étend entre cette gorge de coulée 74 et l'extrémité avant 62 de ce canal, et est constituée par l'espace interstitiel ménagé entre les deux surfaces tronconiques de même angle au sommet, respectivement formées sur la périphérie externe 68 de la pièce 36 et sur la périphérie interne 72 de la pièce 38, à l'avant de la gorge de coulée. Ces deux surfaces tronconiques sont respectivement désignées par les références 78 et 80.

En fait, la périphérie externe 68 de la pièce 36 présente, de l'avant vers l'arrière, une première surface tronconique 78, la rainure 75a, et une deuxième surface tronconique 79. De manière analogue, la périphérie interne 72 de la pièce 38 présente une première surface tronconique 80, la rainure 75b et une deuxième surface tronconique 81. Comme on le voit mieux sur la figure 2, lorsque la pièce 36 est emboîtée dans la pièce 38, les surfaces tronconiques 78 et 80 ménagent entre elles la deuxième partie du canal de diffusion, les rainures 75a et 75b forment la gorge de coulée, et les surfaces tronconiques 79 et 81 sont ajustées l'une sur l'autre pour éviter que la deuxième matière plastique ne remonte vers l'arrière. L'extrémité avant 74c de la gorge de coulée 74 est évidemment directement ouverte sur la deuxième partie du canal de diffusion.

L'épaisseur de l'espace formant cette deuxième partie est sensiblement constante et inférieure à la profondeur de la gorge de coulée. Les points M₁, M₂ et M₃ sont indiqués sur la figure 2 pour mieux expliquer le trajet de la deuxième matière plastique à partir de son entrée dans le deuxième canal d'entrée 14. Pour aller du point M₁ au point M₂, les particules fluides n'auront qu'à parcourir un trajet relativement court, tandis que le trajet est beaucoup plus long du point M₁ au point M₃, puisqu'il fait le tour du canal d'extrusion.

Toutefois, la conformation particulière du canal de diffusion permet de faire en sorte que les particules fluides parvenant en même temps au moins M₁ parviennent également au même moment au point M₂ et M₃. En effet, du point M₁ au point M₂, le trajet se fait pratiquement entièrement dans la deuxième partie 76 du canal de diffusion, donc lentement. En revanche, les particules fluides allant du point M₁ au point M₃ parcourent d'abord la demi-circonférence de la gorge de coulée pour aller jusqu'au point M'₁, trajet sur lequel l'écoulement est rapide du fait de la section relativement importe de la gorge de coulée par rapport à celle de la deuxième partie du canal de diffusion, et seule une très faible portion du trajet se fait, entre le point M'₁ et le point M₃, dans la deuxième partie de section réduite.

Pour faciliter la compréhension, on a choisi des points M₂ et M₃ diamétralement opposés. En fait, la forme en hélice de la gorge de coulée permet de faire en sorte que des particules parvenant en même temps au point M₁ parviennent également toutes en même temps à l'extrémité avant 62 du canal de diffusion. Le débit est par conséquent sensiblement uniforme sur cette extrémité avant, de sorte que les paramètres de l'écoulement sont sensiblement les mêmes sur toute la circonférence de l'entrée de la portion de réglage 60 du deuxième canal d'entrée.

La pièce creuse intérieure 36 présente une face avant 84, réalisée sur une partie d'extrémité avant 82 et s'étendant sensiblement radialement, depuis l'extrémité avant 62 du canal de diffusion 66, jusqu'au canal d'extrusion 22.

Cette face avant constitue la paroi amont de la portion de réglage 60. La paroi aval de cette portion de réglage est réalisée par la face arrière de la pièce aval 40, munie d'un perçage traversant dont le contour 86 constitue, au moins sur un tronçon axial, la paroi du canal d'extrusion. La face arrière 88 de cette pièce est sensiblement radiale, ou, tout au moins présente une portion 87 sensiblement radiale située en regard de la face avant 84 de la pièce de jonction creuse 82 pour former la paroi aval de la portion de réglage 60. Cette dernière est donc constituée par l'espace ménagé entre les faces 84 et 87.

Pour faire varier la section de ce canal, au moins l'une des faces 84 et 87 présente au moins une zone renflée diminuant localement la section de la portion de réglage.

Dans l'exemple représenté, cette zone renflée est constituée par une marche 90 située sur la face avant 84 et entourant l'ouverture de cette dernière, tandis que la partie de la face arrière 87 de la pièce 40 servant à constituer la paroi aval de la portion de réglage est plane. La partie d'extrémité avant 82 entoure le noyau d'extrusion 24, et l'espace ménagé entre la périphérie interne 83 de cette partie 82 et le noyau 24 constitue une première partie 22a du canal d'extrusion 22. Cette première partie se trouve en amont de l'arrivée de la deuxième matière plastique 13 dans le canal d'extrusion, et constitue donc une partie amont de ce canal, sur laquelle seule la première matière plastique 11 est présente, et servant à définir la portion interne de la pièce profilée.

La pièce 36 pourrait être réalisée en une seule pièce avec la partie 82. Toutefois, dans l'exemple représenté, cette partie est constituée par une pièce de jonction 82 mise en place, autour du noyau d'extrusion, à l'extrémité avant de la pièce creuse 36, par encastrement dans cette dernière. De manière générale, notons que cette face avant 84 est solidaire de la pièce 36 (par fixation ou par fabrication en une seule pièce). Lorsque la pièce de jonction 82 est présente, la première partie 22a du canal d'extrusion correspond sensiblement au tronçon ménagé entre le contour interne 83 de cette pièce 82 et le noyau d'extrusion 24.

Le canal d'extrusion comprend une deuxième partie 22b, située en aval de l'arrivée de la deuxième matière plastique 13, et dont la paroi sert à définir le contour externe de la pièce profilée munie de sa couche externe. De préférence, le profil du noyau d'extrusion reste identique sur les deux parties 22a et 22b du canal d'extrusion.

Comme on le voit mieux sur les figures 3 et 4, la marche ou partie en saillie 90 de la face avant 84 présente un bord externe 92 et un bord interne 94 qui suit le contour du perçage traversant de cette pièce. Par conséquent, la forme de ce bord interne 94 définit le contour de la portion interne de la pièce profilée. L'extrémité avant 62 du canal de diffusion 66 se trouve au niveau du bord extérieur circulaire 96 de la face avant 84.

Pour les points, tels que les points P₁ ou P₂ du bord interne 94, qui se trouvent radialement les plus proches du bord circulaire 96, donc de l'extrémité avant du canal de diffusion, la distance entre le bord interne 94 et le bord externe 92 est maximale. En d'autres termes, les points P'₁ et P'₂ du bord externe qui correspondent aux points P₁ et P₂ du bord interne, se trouvent pratiquement situés sur le bord circulaire 96. Ainsi, à partir du moment où la deuxième matière plastique arrive sur le bord circulaire 96, pratiquement tout son trajet jusqu'aux points P₁ et P₂ se fera dans une région de section réduite de la portion de réglage 60, donc très lentement.

En revanche, pour les points tels que les points P₃ et P₄ du bord interne 94, qui se trouvent radialement les plus éloignés du bord circulaire 96, la distance entre le bord interne et le bord externe est minimale. En d'autres termes, à partir du moment où la deuxième matière plastique arrive à l'extrémité avant du canal de diffusion, son trajet jusqu'aux points P₃ ou P₄ se fera tout d'abord, jusqu'aux points P'₃ et P'₄, dans une région de la portion de réglage dans laquelle la section est relativement importante, donc à une vitesse d'écoulement relativement rapide, puis, seulement sur une faible partie du trajet, dans une région dans laquelle la section est diminuée.

Grâce à cette conformation, les particules fluides de deuxième matière plastique parvenant en même temps sur le bord circulaire 96 parviendront également en même temps aux points P₁, P₂, P₃ et P₄, de sorte que la deuxième matière plastique se trouvera répartie de façon homogène sur le contour de la pièce profilée.

De manière avantageuse, la partie en saillie 90 présente une portion plane 90a, qui s'étend transversalement par rapport à la direction longitudinale A du noyau d'extrusion 24, et dont le bord libre constitue le bord externe 92 de cette partie en saillie. Cette portion plane 90 a une épaisseur constante, mais c'est sa largeur, c'est-à-dire sa dimension transversale à l'axe A du noyau d'extrusion, qui varie et permet ainsi de régler les vitesses d'écoulement de la deuxième matière plastique. Notons que le bord externe 92 est un pan incliné, qui permet le passage sans à-coups de la partie courante de la face 84, à la partie en saillie.

La partie en saillie présente également une portion 90b inclinée vers le canal d'extrusion, dont le bord libre constitue le bord interne 94 de cette partie en saillie. Pour faire en sorte que la section de la portion de réglage reste constante dans toute la région de cette portion munie de la partie en saillie 90, et donc également dans la région dans laquelle s'étend la portion inclinée 90b, le perçage traversant de la pièce aval 40 présente une partie arrière 86' évasée vers l'arrière, située en regard de la portion inclinée 90b et à une distance sensiblement constante de cette dernière. Dans la mesure où, dans la majeure partie de la portion de réglage, l'écoulement se fait radialement par rapport à la direction d'extrusion, la portion inclinée 90b permet de modifier la direction de cet écoulement jusqu'à l'amener, en sortie du deuxième canal d'entrée, sensiblement tangentiellement à la direction d'extrusion F.

On pourrait également faire varier continûment la section de la portion de réglage 60 à partir de son bord 62. A cet effet, la face avant 84 pourrait être globalement convexe. Cette convexité serait plus forte ou plus brusque dans les zones dans lesquelles on souhaite fortement ralentir l'écoulement (c'est-à-dire dans les zones pour lesquelles le bord interne 94 est proche du bord circulaire 96), et moins forte dans les zones où l'on ne souhaite pas ralentir l'écoulement de manière trop sensible (c'est-à-dire dans les zones pour lesquelles le bord interne 94 est éloigné du bord circulaire 96).

Il est avantageux que la face avant 84 soit aisément modifiable, ce qui permettrait, avec le même outillage, de fabriquer différents profilés ayant le même coeur, mais dont les couches externes pourraient différer par leur épaisseur ou par leur répartition sur le contour ou, seulement, sur certaines faces. Pour ce faire, on peut mettre à profit le fait d'utiliser une pièce de jonction 82 indépendante et, par conséquent, interchangeable.

La paroi de la deuxième partie 22b du canal d'extrusion a une forme analogue à celle de la première partie 22a. Pour permettre la réalisation de la couche externe, c'est-à-dire l'ajout de cette couche sur la portion interne de la pièce profilée extrudée dans la première partie 22a du canal d'extrusion, l'espacement e' entre la paroi de la deuxième partie 22b et le noyau d'extrusion 24 est supérieur à l'espacement e entre la paroi de la première partie 22a du canal d'extrusion et le noyau d'extrusion 24.

Evidemment, au cas où seules certaines faces des pièces profilées seraient réouvertes par la deuxième matière plastique, cette différence d'espacement ne concernerait que les facettes du canal d'extrusion qui correspondent à ces faces.

Comme on le voit sur la figure 6, le canal de diffusion 66 et la portion de réglage 60 du deuxième canal d'entrée permettent de doter la pièce profilée d'une couche externe 57 fine homogène. Cette couche externe est marquée par un trait fort s'étendant sur pratiquement toute la surface externe de la pièce profilée.

Toutefois, comme on l'a indiqué précédemment, certaines zones du contour du profilé, telles que les rainures 54a, 54b et 54c, sont dépourvues de la couche externe. Ceci est obtenu grâce à une conformation particulière de la buse d'extrusion, dont la face avant est visible sur la figure 5. On voit sur cette figure la paroi 100 du canal d'extrusion à sa sortie. On constate que cette paroi a exactement la même forme que le contour extérieur de la pièce profilée de la figure 6. On remarque notamment des nervures 101, 102 et 103 donnant leurs formes aux rainures 54a, 54b et 54c. Ces nervures sont seulement présentes dans un tronçon terminal du canal d'extrusion, tandis qu'elles sont absentes de la majeure partie de ce canal, et notamment de la partie située juste en aval de la sortie du deuxième canal d'entrée 14.

En d'autres termes, le canal d'extrusion comporte un tronçon terminal dont la paroi comporte au moins une nervure absente de la paroi des autres tronçons de ce canal et qui sert à définir, sur le contour externe de la pièce profilée, une rainure sur laquelle la couche externe est absente. Si la buse d'extrusion avait la forme de celle de la figure 7, la totalité du contour de la pièce profilée serait recouverte par la couche externe. En fait, la forme de la buse de la figure 7 correspond à la paroi de la partie du canal d'extrusion située entre la sortie 30 du deuxième canal d'entrée et le tronçon terminal du canal d'extrusion (on y reconnaît les facettes qui servent à produire les divers segments du contour externe de la pièce profilée). On voit que les nervures 101 et 102 ont été ajoutées dans des zones planes 101' et 102', et que la nervure 103 a été ajoutée dans une rainure 103'.

Bien sûr on pourrait également, sans difficulté, faire en sorte que la couche externe soit présente même dans les rainures 54a, 54b ou 54c, en donnant à la paroi du canal d'extrusion la forme de la buse de la figure 5, dès la première partie 22a de ce canal.

Le dispositif des figures 1 à 3 permet de répartir la couche externe sur la totalité du contour externe des pièces profilées, éventuellement à l'exception de certaines rainures.

Toutefois, comme on l'a indiqué précédemment, on peut souhaiter n'obtenir la couche externe que sur une partie, dite "partie recouverte", du contour externe des pièces profilées. Dans ce cas, les tronçons de l'extrémité de sortie du deuxième canal d'entrée correspondant aux parties "non recouvertes" peuvent être fermés. De plus, la sortie du canal de diffusion peut n'être ouverte que sur une ou plusieurs portions d'anneau, sur lesquelles la vitesse d'écoulement de la deuxième matière plastique est homogène et qui correspondent seulement à la partie recouverte (éventuellement en plusieurs tronçons) des pièces profilées.

L'expression "sensiblement annulaire" utilisée pour qualifier cette sortie recouvre également cette possibilité.

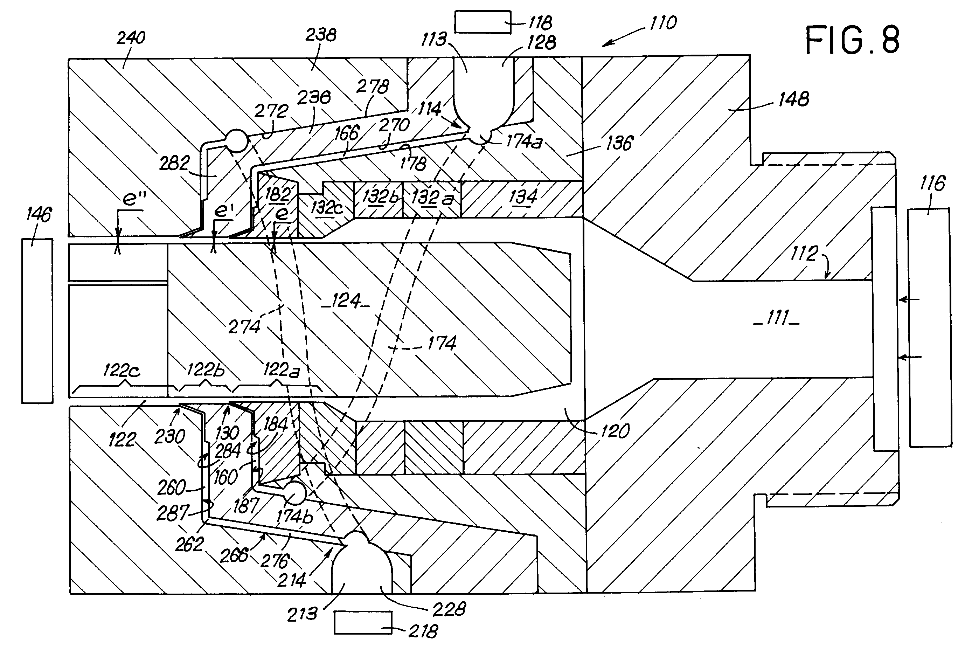

Sur la figure 8, les parties du dispositif 110 analogues à celles du dispositif 10 sont affectées des mêmes références que sur les figures 1 à 3, augmentées de 100.

Le dispositif 110 permet de réaliser des pièces profilées avec deux couches externes. Il comporte en effet, outre les premier et deuxième canaux d'entrée 112 et 114 pour les première et deuxième matières plastiques 111 et 113, un troisième canal d'entrée 214 alimenté en troisième matière plastique 213 par une troisième extrudeuse 218.

Comme pour la deuxième matière plastique, le dispositif comporte des moyens pour régler le flux de la troisième matière plastique dans le troisième canal d'entrée 214 et pour déterminer, à l'extrémité de sortie 230 de ce dernier, une répartition homogène de ladite troisième matière plastique sur le contour externe de la pièce profilée ou, tout au moins, sur une partie de ce contour devant être recouverte par la troisième matière plastique.

De façon générale, la conformation du troisième canal d'entrée est analogue à celle du deuxième, et la sortie 230 de ce troisième canal débouche dans le canal d'extrusion 122 en aval de la zone dans laquelle débouche la sortie 130 du deuxième canal 114.

Plus précisément, dans l'exemple représenté, le troisième canal d'entrée 214 comporte un canal de diffusion 266, dont la sortie globalement annulaire 262 constitue l'entrée d'une portion de réglage 260.

Une pièce creuse intermédiaire 236, dont les périphéries interne 270 et externe 278 sont globalement tronconiques, est emboîtée sur la pièce creuse intérieure 136, tandis que la pièce creuse extérieure 238, dont la périphérie interne 272 est globalement tronconique, est elle-même emboîtée sur la pièce creuse intermédiaire 236.

Ainsi, le canal de diffusion 166 du deuxième canal d'entrée 114, avec sa gorge 174 en deux demi-spires d'hélice, est ménagé entre la périphérie externe 178, globalement tronconique, de la pièce 136 et la périphérie interne 270, globalement tronconique, de la pièce 236. Quant à la portion de réglage 160 de ce canal, elle est ménagée entre la face avant 184 et une paroi aval 187 constituée par la face arrière d'une partie d'extrémité avant 282 sensiblement radiale de la pièce 236.

Le troisième canal d'entrée 214 comporte un canal de diffusion 266, formé par un espace tronconique 276 et une gorge 274 en deux demi-spires d'hélice, et ménagé entre la périphérie externe 278 globalement tronconique de la pièce intermédiaire 236 et la périphérie interne 272, également globalement tronconique, de la pièce externe 238.

Ce troisième canal 214 comporte également une portion de réglage 260, dont la section varie, ménagée entre la face avant sensiblement radiale 284 de la partie 282 de la pièce 236 et une paroi aval sensiblement radiale 287 formée sur la face arrière d'une partie 240 de la pièce 238.

Notons que les parties 282 et 240 peuvent être des pièces indépendantes ou respectivement faire corps avec les pièces 236 et 238.

Le canal d'extrusion 122 comporte une première partie 122a, située en amont de la sortie 130 du canal 114 et de section courante e, une deuxième partie 122b, située entre les sorties 130 et 230, et de section courante e' supérieure à e, et une troisième partie 122c, située en aval de la sortie 130 et de section courante e'' supérieure à e'.

L'exemple de la figure 8 permet de superposer deux couches externes, réparties de façon homogène sur le contour externe des pièces profilées. On pourrait également ne faire déboucher la sortie 130 que sur certaines facettes du canal d'extrusion et faire déboucher la sortie 230 sur d'autres facettes de ce canal. Ainsi, certaines parties du contour externe des pièces profilées pourraient être recouvertes avec la deuxième matière plastique, tandis que d'autres parties de ce contour le seraient avec la troisième matière plastique.

Pour éviter de charger la figure 8, on n'a représenté que trois canaux d'entrée. De manière générale, on peut réaliser n canaux d'entrée de la même manière que les canaux 114 et 214 et les raccorder successivement au canal d'extrusion, en amont duquel est raccordé le premier canal d'entrée.

Notons encore que, sur la figure 8, les entrées 128 et 228 des deuxième et troisième canaux d'entrée sont pratiquement diamétralement opposées, pour des raisons d'encombrement liées à la présence des extrudeuses 118 et 218. De manière générale, il suffit qu'elles soient décalées angulairement.

Le dispositif qui vient d'être décrit sert à mettre en oeuvre un procédé pour réaliser une pièce profilée creuse présentant un contour externe qui, en section droite, comporte une pluralité de segments, et comprenant une portion interne ou coeur dans une première matière plastique et au moins une deuxième externe réalisée dans une deuxième matière plastique.

Pour ce faire, à l'aide de la première extrudeuse 16 ou 116, on alimente le premier canal d'entrée 12 ou 112 avec la première matière plastique fondue 11 ou 111, on réalise l'écoulement de cette première matière plastique dans le canal intermédiaire 20 ou 120 et dans le canal d'extrusion 22 ou 122 pour extruder la portion interne de la pièce profilée, et, à l'aide d'au moins la deuxième extrudeuse 18, 118 ou 218, on alimente au moins le deuxième canal d'entrée 14, 114 ou 214 avec au moins la deuxième matière plastique fondue 13 et on réalise l'écoulement de cette deuxième matière plastique dans le canal d'extrusion ou, plus précisément, sur ladite portion interne de la pièce profilée pour extruder, sur cette portion interne, la couche externe de cette pièce.

Le dispositif qui vient d'être décrit, dans l'une ou l'autre de ses variantes, est conformé de telle sorte que toute zone de turbulence ou d'arrêt du flux de l'une ou l'autre des matières plastiques est évitée.

Ceci est un aspect important de l'invention dans la mesure où la matière plastique risquerait de séjourner trop longtemps dans de telles zones, et donc d'être exposée à de trop hautes températures, ce qui la dégraderait.

En fait, ce dispositif permet d'extruder au choix des matières thermosensibles ou des matières thermorésistantes.

## Revendications

1. Dispositif d'extrusion pour réaliser une pièce profilée creuse (50) présentant un contour externe (52) qui, en section droite, comporte une pluralité de segments (52a, 52b, 52c), et comprenant une portion interne (56) réalisée dans une première matière plastique et au moins une couche externe (57), réalisée dans une deuxième matière plastique et s'étendant sur au moins une partie, dite "partie recouverte", dudit contour externe, le dispositif comprenant :
- un premier canal d'entrée (12),
- une première extrudeuse (16) destinée à alimenter le premier canal d'entrée (12) avec une première matière plastique fondue (11),
- un corps (10) comportant, successivement disposés axialement dans le sens de l'écoulement (F) de ladite première matière plastique (11), un canal intermédiaire (20) raccordé au premier canal d'entrée (12) et un canal d'extrusion (22) dont la paroi présente plusieurs facettes longitudinales servant à définir le contour externe de la pièce profilée,
- un noyau axial d'extrusion (24) présentant un premier tronçon (24a) disposé dans le canal intermédiaire (20) et un deuxième tronçon (24b) disposé dans le canal d'extrusion (22), l'espace (26) ménagé entre ledit deuxième tronçon et la paroi du canal d'extrusion servant à définir la forme de la pièce profilée, dont le deuxième tronçon du noyau définit le contour interne et dont la paroi du canal d'extrusion définit le contour externe,
- un deuxième canal d'entrée (14) ayant une entrée (28) et présentant une extrémité de sortie (30) raccordée au canal d'extrusion (22), et
- une deuxième extrudeuse (18) destinée à alimenter le deuxième canal d'entrée (14) avec une deuxième matière plastique fondue (13),
le dispositif comportant des moyens pour régler le flux de la deuxième matière plastique (13) dans le deuxième canal d'entrée (14) et pour déterminer, à l'extrémité de sortie (30) de ce dernier, une répartition homogène de ladite deuxième matière plastique sur ladite partie recouverte du contour externe de la pièce profilée (50), le dispositif comportant, en outre, une pièce creuse intérieure (36) présentant un évidement traversant (70) à travers lequel passe le noyau d'extrusion (24) et une pièce creuse extérieure (38) susceptible de s'emboîter sur ladite pièce creuse intérieure, ces pièces (36, 38) ménageant entre elles, lorsqu'elles sont emboîtées, un canal de diffusion (66) pour la deuxième matière plastique (13), ce canal constituant une partie du deuxième canal d'entrée (14), et comprenant une première partie (74) ayant la forme de deux demi-spires d'hélice, symétriques par rapport à un plan de symétrie de la périphérie externe (68) de la pièce creuse intérieure (36) et se rejoignant dans ce plan à leurs deux extrémités (74a, 74b) pour former une gorge de coulée continue, la première zone de jonction (74a) des demi-spires étant située vers l'arrière par rapport à la deuxième zone de jonction (74b) et étant directement raccordée à l'entrée (28) du deuxième canal d'entrée (14), le canal de diffusion (66) comprenant, en outre, une deuxième partie (76), s'étendant entre la gorge de coulée (74) et l'extrémité avant (62) dudit canal (66) et constituée par l'espace intersticiel ménagé entre les faces en regard de la périphérie externe (68) de la pièce intérieure (36) et la périphérie interne (72) de la pièce extérieure (38),
caractérisé en ce que la pièce creuse intérieure (36) comporte une partie d'extrémité avant (82) présentant une face avant (84) qui s'étend sensiblement radialement entre l'extrémité avant (62) du canal de diffusion (66) et le canal d'extrusion (22),
en ce qu'il comporte une pièce avale (40) munie d'un perçage traversant dont le contour (86) constitue, au moins sur un tronçon axial, la paroi du canal d'extrusion (22), ladite pièce avale présentant une face arrière (87), sensiblement radiale et située en regard de la face avant (84) de ladite partie d'extrémité avant (82),
en ce que le deuxième canal d'entrée (14) comporte une portion de réglage (60) constituée par l'espace ménagé entre la face arrière (87) de la pièce avale (40) et la face avant (84) de la partie d'extrémité avant (82),
et en ce que cette portion de réglage présente des variations de sa section constituant des moyens pour, à partir d'un débit de deuxième matière plastique sensiblement uniforme sur l'extrémité avant (62) du canal de diffusion (66), régler la vitesse d'écoulement de la deuxième matière plastique, vers une facette donnée de la paroi du canal d'extrusion (22), en fonction de la distance mesurée selon le chemin d'écoulement de la deuxième matière plastique, entre l'entrée (62) de la portion de réglage (60) et ladite facette, les variations de la section de la portion de réglage (60) étant réalisées à l'aide d'au moins une zone renflée (90), équipant au moins l'une des faces (87, 84) entre lesquelles est ménagée la portion de réglage (60) et diminuant localement la section de cette dernière.

2. Dispositif selon la revendication 1, caractérisé en ce que la périphérie externe (68) de la pièce creuse intérieure (36) présente globalement la forme d'un tronc de cône évasé vers l'arrière, la deuxième partie (76) du canal de diffusion (66) étant ainsi ménagée entre deux surfaces tronconiques (78, 80) de même angle au sommet, respectivement formées sur la périphérie externe (68) de la pièce intérieure (36) et sur la périphérie interne (72) de la pièce extérieure (38), l'épaisseur de l'espace constituant ladite deuxième partie étant sensiblement constante et inférieure à la profondeur de la gorge de coulée (74).

3. Dispositif selon la revendication 1 ou 2, caractérisé en ce que la face arrière (87) de la pièce avale (40) est sensiblement plane, en ce que la partie d'extrémité avant (82) entoure le noyau d'extrusion et l'espace ménagé entre la périphérie interne de cette partie et ce noyau constitue une première partie (22a) du canal d'extrusion (22), servant à définir la portion interne de la pièce profilée, ce canal comprenant une deuxième partie (22b), située en aval de la première partie (22a) et dont la paroi sert à définir le contour externe de la pièce profilée munie de sa couche externe, en ce que la face avant (84) de la partie d'extrémité avant (82) comporte une partie en saillie (90) présentant un bord externe et un bord interne qui suit le contour de la périphérie interne de la partie d'extrémité avant (82), et en ce que, pour les points (P₁, P₂) du bord interne (94) radialement les plus proches de l'extrémité avant (62) du canal de diffusion (66), la distance entre le bord interne (94) et le bord externe (92) est maximale, tandis que, pour les points (P₃, P₄) du bord interne (94) radialement les plus éloignés de l'extrémité avant (62) du canal de diffusion (60), la distance entre le bord interne (94) et le bord externe (92) est minimale.

4. Dispositif selon la revendication 3, caractérisé en ce que la partie en saillie (90) présente une portion plane (90a), s'étendant transversalement par rapport à la direction longitudinale (A) du noyau d'extrusion (24) et dont le bord libre constitue le bord externe (92) de ladite partie en saillie (90), et une portion (90b) inclinée vers le canal d'extrusion, dont le bord libre constitue le bord interne (94) de ladite partie, et en ce que le perçage traversant de la pièce avale présente une partie arrière (86') évasée vers l'arrière située en regard, et à une distance sensiblement constante, de cette portion inclinée (90b).

5. Dispositif selon l'une quelconque des revendications 1 à 4, caractérisé en ce que la paroi de la deuxième partie (22b) du canal d'extrusion (22) a une forme analogue à celle de la première partie (22a) dudit canal, l'espacement (e') entre la paroi de cette deuxième partie et le noyau d'extrusion étant supérieur à l'espacement (e) entre la paroi de la première partie du canal d'extrusion et le noyau d'extrusion.

6. Dispositif selon l'une quelconque des revendications 1 à 5, caractérisé en ce que le canal d'extrusion (22) comporte un tronçon terminal, dont la paroi comporte au moins une nervure (101, 102, 103), absente de la paroi des autres tronçons dudit canal et servant à définir, sur le contour externe (57) de la pièce profilée, une rainure (54a, 54b, 54c) sur laquelle la couche externe est absente.

7. Dispositif selon l'une quelconque des revendications 1 à 6, caractérisé en ce qu'il comporte un troisième canal d'entrée (214), alimenté en troisième matière plastique fondue (213) par une troisième extrudeuse (218), ayant une entrée (228) et présentant une extrémité de sortie (230) raccordée au canal d'extrusion (122) en aval de la zone de raccord de l'extrémité de sortie (130) du deuxième canal d'entrée (114) avec ledit canal d'extrusion (122), le troisième canal d'entrée (214) ayant une configuration analogue à celle du deuxième canal d'entrée.

8. Dispositif selon la revendication 7, caractérisé en ce que, n étant un nombre entier supérieur à 1, il comporte n+1 canaux d'entrée comprenant, outre les premier et deuxième canaux d'entrée (112, 114), n-1 autres canaux d'entrée (214), de conformation analogue à celle du deuxième canal d'entrée, et dont les extrémités de sortie respectives sont successivement raccordées au canal d'extrusion (122) dans le sens allant de l'amont vers l'aval.

9. Procédé pour réaliser une pièce profilée creuse (50) présentant un contour externe (52) qui, en section droite, comporte une pluralité de segments (52a, 52b, 52c), et comprenant une portion (56) interne réalisée dans une première matière plastique et une couche externe (57) réalisée dans une deuxième matière plastique,
caractérisé en ce que l'on fournit un dispositif selon l'une quelconque des revendications 1 à 8,
en ce que, à l'aide de la première extrudeuse (16, 116), on alimente le premier canal d'entrée (12, 112) avec la première matière plastique fondue (11, 111), on réalise l'écoulement de cette première matière plastique dans le canal intermédiaire (20, 120) et dans le canal d'extrusion (22, 122) pour extruder la portion interne de la pièce profilée, et, à l'aide d'au moins la deuxième extrudeuse (18, 118 ; 218), on alimente au moins le deuxième canal d'entrée (14, 114, 214) avec au moins la deuxième matière plastique fondue (13, 113 ; 213) et on réalise l'écoulement de cette deuxième matière plastique dans le canal d'extrusion, sur ladite portion interne de la pièce profilée pour extruder, sur cette portion interne, la couche externe de cette pièce.

## Claims

1. An extrusion device for making a hollow section member (50) having an external outline (52) which, in right section, comprises a plurality of segments (52a, 52b, 52c), being made up of an internal portion (56) made of a first plastics material and at least one outer layer (57) made of a second plastics material and extending over at least a "covered" portion of said external outline, the device comprising:
• a first inlet channel (12);
• a first extruder (16) for feeding the first inlet channel (12) with a first molten plastics material (11);
• a body (10) that comprises, in succession on an axis in the flow direction (F) of the first plastics material (11), an intermediate channel (20) connected to the first inlet channel (12), and an extrusion channel (22) whose wall has a plurality of longitudinal facets serving to define the external outline of the section member;
• an axial extrusion core (24) having a first length (24a) located in the intermediate channel (20), and a second length (24b) located in the extrusion channel (22), the gap (26) left between said second length and the wall of the extrusion channel serving to define the shape of the section member, the second length of the core defining the internal outline, and the wall of the extrusion channel defining the external outline of said section member;
• a second inlet channel (14) having an inlet (28) and an outlet end (30) connecting with the extrusion channel (22); and
• a second extruder (18) designed to feed the second inlet channel (14) with a second molten plastics material (13);
the device including means for controlling the flow of the second plastics material (13) in the second inlet channel (14) and for ensuring that said second plastics material is uniformly distributed over said covered portion of the external outline of the section member (50) at the outlet end (30) of the second inlet channel, the device also including an inner hollow part (36) having a through hole (70) through which the extrusion core (24) passes, and an outer hollow part (38) suitable for engaging on said inner hollow part, said parts (36, 38), when engaged one with the other, forming between them a distribution channel (66) for the second plastics material (13), said channel constituting a portion of the second inlet channel (14) and comprising a first portion (74) in the form of two helical half-turns that are symmetrical about a plane of symmetry of the outer periphery (68) of the inner hollow part (36), with their two ends (74a, 74b) meeting in said plane to form a continuous casting passageway, the first junction zone (24a) between the half-turns being situated behind the second junction zone (24b) and being directly coupled to the inlet (28) of the second inlet channel (14), the distribution channel (66) further including a second portion (76) extending between the casting passageway (74) and the front end (62) of said channel (66), and being constituted by the gap left between the facing faces of the outer periphery (68) of the inner part (36) and the inner periphery (72) of the outer part (38),
the device being characterised in that the inner hollow part (36) includes a front end portion (82) having a front face (84) which extends substantially radially between the front end (62) of the distribution channel (66) and the extrusion channel (22);
in that it includes a downstream part (40) provided with a through hole whose outline (86) constitutes, at least in an axial length thereof, the wall of the extrusion channel (22), said downstream part having a back face (87) that is substantially radial and situated facing the front face (84) of said front end portion (82);
in that the second inlet channel (14) includes an adjustment length (60) constituted by the gap left between the back face (87) of the downstream part (40) and the front face (84) of the front end portion (82); and
in that said adjustment length has variations in its section constituting means for acting on a substantially uniform flow rate of the second plastics material over the front end (62) of the distribution channel (66) to adjust the flow speed of the second plastics material towards a given facet of the wall of the extrusion channel (22) as a function of the distance measured along the flow path of the second plastics material between the inlet (62) of the adjustment length (60) and said facet, the variations in the section of the adjustment length (60) being implemented by means of at least one projecting zone (90) occupying at least one of the faces (87, 84) between which the adjustment length (60) is provided and locally reducing the section thereof.

2. A device according to claim 1, characterised in that the outer periphery (68) of the inner hollow part (36) is generally in the form of a backwardly-flaring truncated cone, the second portion (76) of the distribution channel (66) thus being formed between two frustoconical surfaces (78, 80) having the same angle at the apex and respectively formed on the outer periphery (68) of the inner part (36) and on the inner periphery (72) of the outer part (38), the width of the gap constituting said second portion being substantially constant and less than the depth of the casting passageway (74).

3. A device according to claim 1 or 2, characterised in that the back face (87) of the downstream part (40) is substantially plane, in that the front end portion (82) surrounds the extrusion core, and the gap left between the inner periphery of said portion and the core constitutes a first portion (22a) of the extrusion channel (22) serving to define the internal portion of the section member, said channel comprising a second portion (22b) situated downstream from the first portion (22a) with the wall thereof serving to define the external outline of the section member provided with its outer layer, in that the front face (84) of the front end portion (82) includes a projecting portion (90) having an outer edge and an inner edge following the outline of the inner periphery of the front end portion (82), and in that, for the points (P₁, P₂) of the inner edge (94) that are radially closest to the front end (62) of the distribution channel (66) the distance between the inner edge (94) and the outer edge (92) is at a maximum, whereas for the points (P₃, P₄) of the inner edge (94) that are radially furthest from the front end (62) of the distribution channel (60) the distance between the inner edge (94) and the outer edge (92) is at a minimum.

4. A device according to claim 3, characterised in that the projecting portion (90) has a plane length (90a) extending transversely relative to the longitudinal direction (A) of the extrusion core (24) and whose free edge constitutes the outer edge (92) of said projecting portion (90), and a length (90b) sloping towards the extrusion channel and having a free edge constituting the inner edge (94) of said portion, and in that the through hole in the downstream part has a backwardly-flaring back portion (86') situated facing said sloping portion (90b) and at a substantially constant distance therefrom.

5. A device according to any one of claims 1 to 4, characterised in that the wall of the second portion (22b) of the extrusion channel (22) is analogous in shape to the first portion (22a) of said channel, with the gap (e') between the wall of said second portion and the extrusion core being greater than the gap (e) between the wall of the first portion of the extrusion channel and the extrusion core.

6. A device according to any one of claims 1 to 5, characterised in that the extrusion channel (22) includes an end length whose wall includes at least one rib (101, 102, 103) missing from the wall of the other lengths of said channel and serving to define a groove (54a, 54b, 54c) in the external outline (57) of the section member over which the outer layer is absent.

7. A device according to any one of claims 1 to 6, characterised in that it includes a third inlet channel (214) fed with a third molten plastics material (213) by a third extruder (218), said third inlet channel having an inlet (228) and having an outlet end (230) coupled to the extrusion channel (122) downstream from the zone where the outlet end (130) of the second inlet channel (114) couples with said extrusion channel (122), the third inlet channel (214) being analogous in configuration to the second inlet channel.

8. A device according to claim 7, characterised in that for n being an integer greater than 1, the device has n+1 inlet channels, comprising in addition to the first and second inlet channels (112, 114), n-1 other inlet channels (214), of shape analogous to that of the second inlet channel, with the respective outlet ends thereof coupling in succession with the extrusion channel (122) going from the upstream end towards the downstream end.

9. A method of making a hollow section member (50) having an external outline (52) which, in right cross-section, comprises a plurality of segments (52a, 52b, 52c), and including an internal portion (56) made of a first plastics material together with an outer layer (57) made in a second plastics material,
characterised in that a device according to any one of claims 1 to 8 is provided; and
in that the first extruder (16, 116) is used to feed the first inlet channel (12, 112) with the first molten plastics material (11, 111) to establish a flow of said first plastics material in the intermediate channel (20, 120) and in the extrusion channel (22, 122) so as to extrude the internal portion of the section member, and at least one second extruder (18, 118; 218) is used to feed at least the second inlet channel (14, 114, 214) with at least the second molten plastics material (13, 113; 213), and said second plastics material is caused to flow into the extrusion channel over said internal portion of the section member so as to extrude the outer layer of said section member over said internal portion.

## Patentansprüche

1. Extrusionsvorrichtung zur Herstellung eines Hohlprofilteils (50), das eine Außenkontur (52) aufweist, die im Querschnitt eine Mehrzahl von Segmenten (52a, 52b, 52c) aufweist, und ein Innenteil (56) enthält, das aus einem ersten Kunststoffmaterial und zumindest einer Außenschicht (57) hergestellt ist, die aus einem zweiten Kunststoffmaterial hergestellt ist und sich zumindest über einen Teil, den sogenannten "abgedeckten Teil", der Außenkontur erstreckt, welche Vorrichtung enthält:
- einen ersten Einlaßkanal (12),
- eine erste Strangpresse (16), die zum Speisen des ersten Einlaßkanals (12) mit einem ersten geschmolzenen Kunststoffmaterial (11) bestimmt ist,
- einen Körper (10), der nacheinander axial in Strömungsrichtung (F) des ersten Kunststoffmaterials (11) angeordnet einen Zwischenkanal (20), der mit dem ersten Einlaßkanal (12) verbunden ist, und einen Extrusionskanal (22) enthält, dessen Wandung mehrere Längsfacetten zum Definieren der Außenkontur des Profilteils aufweist,
- einen axialen Extrusionskern (24), der einen ersten Abschnitt (24a), der im Zwischenkanal (20) angeordnet ist, und einen zweiten Abschnitt (24b) aufweist, der im Extrusionskanal (22) angeordnet ist, wobei der zwischen dem zweiten Abschnitt und der Wandung des Extrusionskanals vorhandene Zwischenraum (26) zur Bestimmung der Form des Profilteils dient, wobei der zweite Abschnitt des Kerns die Innenkontur definiert und wobei die Wandung des Extrusionskanals die Außenkontur definiert,
- einen zweiten Einlaßkanal (14), der einen Einlaß (28) und ein Auslaßende (30) hat, das mit dem Extrusionskanal (22) verbunden ist, und
- eine zweite Strangpresse (18), die zum Speisen des zweiten Einlaßkanals (14) mit einem zweiten geschmolzenen Kunststoffmaterial (13) bestimmt ist,
welche Vorrichtung Mittel aufweist, um den Fluß des zweiten Kunststoffmaterials (13) im zweiten Einlaßkanal (14) zu regeln, und um am Auslaßende (30) des letzteren eine homogene Verteilung des zweiten Kunststoffmaterials auf den abgedeckten Teil der Außenkontur des Profilteils (50) zu bestimmen, welche Vorrichtung ferner ein inneres Hohlteil (36), das eine Durchgangsausnehmung (70) aufweist, durch die der Extrusionskern (24) hindurchgeht, und ein äußeres Hohlteil (38) aufweist, das auf das innere Hohlteil aufsteckbar ist, welche Teile (36, 38) aufeinandergesteckt zwischen sich einen Diffusionskanal (66) für das zweite Kunststoffmaterial (13) einschließen, welcher Kanal einen Teil des zweiten Einlaßkanals (14) bildet und einen ersten Bereich (74) enthält, der die Form von zwei schraubenartigen Halbwindungen hat, die zu einer Symmetrieebene des Außenumfangs (68) des inneren Hohlteils (36) plansymmetrisch sind und in dieser Ebene mit ihren beiden Endabschnitten (74a, 74b) aufeinandertreffen, um eine kontinuierliche Gießkehle zu bilden, welcher erster Verbindungsbereich (74a) der Halbwindungen gegenüber dem zweiten Verbindungsbereich (74b) nach hinten versetzt und direkt mit dem Einlaß (28) des zweiten Einlaßkanals (14) verbunden ist, welcher Diffusionskanal (66) ferner einen zweiten Bereich (76) enthält, der sich zwischen der Gießkehle (74) und dem vorderen Ende (62) dieses Kanals (66) erstreckt und durch den Zwischenraum gebildet ist, der zwischen den einander gegenüberliegenden Seiten des Außenumfangs (68) des Innenteils (36) und des Innenumfangs (72) des Außenteils (38) vorhanden ist,
dadurch gekennzeichnet, daß das innere Hohlteil (36) einen vorderen Endabschnitt (82) mit einer Vorderseite (84) aufweist, die sich im wesentlichen radial zwischen dem vorderen Ende (62) des Diffusionskanals (66) und dem Extrusionskanal (22) erstreckt,
daß sie ein nachgelagertes Teil (40) enthält, das mit einer Durchgangsbohrung versehen ist, deren Kontur (86) zumindest über einem axialen Abschnitt die Wandung des Extrusionskanals (22) bildet, welches nachgelagerte Teil eine Hinterseite (87) aufweist, die im wesentlichen radial verläuft und der Vorderseite (84) des vorderen Endabschnitts (82) gegenüberliegt,
daß der zweite Einlaßkanal (14) einen Verstellteil (60) enthält, der durch den Raum zwischen der Hinterseite (87) des nachgelagerten Teils (40) und der Vorderseite (84) des vorderen Endabschnitts (82) gebildet ist,
und daß dieser Verstellteil einen veränderlichen Querschnitt aufweist, wodurch Mittel gebildet sind, um, ausgehend von einem im wesentlichen einheitlichen Durchsatz des zweiten Kunststoffmaterials am vorderen Ende (62) des Diffusionskanals (66), die Strömungsgeschwindigkeit des zweiten Kunststoffmaterials zu einer gegebenen Facette der Wandung des Extrusionskanals (22) zu regeln als Funktion des entlang des Strömungsweges des zweiten Kunststoffmaterials gemessen Abstandes zwischen dem Einlaß (62) des Verstellteils (60) und dieser Facette, wobei die Querschnittsveränderungen des Verstellteils (60) mit Hilfe von zumindest einem Verstärkungsbereich (90) durchgeführt werden, mit dem zumindest eine der zwischen dem Verstellteil (60) vorgesehenen Seiten (87, 84) versehen ist und der den Querschnitt des letztgenannten bereichsweise verkleinert.

2. Vorrichtung nach Anspruch 1, dadurch gekennzeichnet, daß der Außenumfang (68) des inneren Hohlteils (36) insgesamt die Form eines nach hinten erweiterten Kegelstumpfs aufweist, wobei der zweite Teil (76) des Diffusionskanals (66) zwischen zwei kegelstumpfförmigen Flächen (78, 80) mit gleichem Scheitelwinkel vorgesehen ist, welche jeweils am Außenumfang (68) des inneren Teils (36) und am Innenumfang (72) des äußeren Teils (38) gebildet sind, wobei die Dicke des den zweiten Teil bildenden Raums im wesentlichen gleichbleibend und geringer als die Tiefe der Gießkehle (74) ist.

3. Vorrichtung nach Anspruch 1 oder 2, dadurch gekennzeichnet, daß die Hinterseite (87) des nachgelagerten Teils (49) im wesentlichen eben ist, daß der vordere Endabschnitt (82) den Extrusionskern umschließt und der zwischen dem Innenumfang dieses Teils und dieses Kerns vorhandene Zwischenraum einen ersten Teil (22a) des Extrusionskanals (22) bildet, der zum Definieren des Innenbereichs des Profilteils dient, welcher Kanal einen zweiten Teil (22b) enthält, der dem ersten Teil (22a) nachgelagert ist und dessen Wandung zum Definieren der Außenkontur des Profilteils mit äußerer Schicht dient, daß die Vorderseite (84) des vorderen Endabschnitts (82) einen Vorsprungsteil (90) aufweist, der einen Außenrand und einen Innenrand aufweist, welcher der Kontur des Außenumfangs des vorderen Endabschnitts (82) folgt, und daß bei den Punkten (P1, P2) des Innenrands (94), welche dem vorderen Endabschnitt (62) des Diffusionskanals (66) radial am nächsten liegen, der Abstand zwischen dem Innenrand (94) und dem Außenrand (92) am größten ist, während bei den Punkten (P3, P4) des Innenrandes (94), welche vom vorderen Endabschnitt (62) des Diffusionskanals (66) am weitesten entfernt sind, der Abstand zwischen dem Innenrand (94) und dem Außenrand (92) am kleinsten ist.

4. Vorrichtung nach Anspruch 3, dadurch gekennzeichnet, daß der Vorsprungsteil (90) einen ebenen Bereich (90a), der sich quer zur Längsrichtung (A) des Extrusionskerns (24) erstreckt und dessen freier Rand den Außenrand (92) des Vorsprungsteils (90) bildet, und einen zum Extrusionskanal geneigten Bereich (90b) aufweist, dessen freier Rand den Innenrand (94) dieses Teils bildet, und daß die Durchgangsbohrung des nachgelagerten Teils einen hinteren Bereich (86') aufweist, der nach hinten erweitert ist und in einem im wesentlichen konstanten Abstand diesem geneigten Bereich (90b) gegenüberliegt.

5. Vorrichtung nach einem der Ansprüche 1 bis 4, dadurch gekennzeichnet, daß die Wandung des zweiten Teils (22b) des Extrusionskanals (22) eine analoge Form zu der des ersten Teils (22a) dieses Kanals hat, welcher Abstand (e') zwischen der Wandung dieses zweiten Teils und dem Extrusionskern größer ist als der Abstand (e) zwischen der Wandung des ersten Teils des Extrusionskanals und dem Extrusionskern.

6. Vorrichtung nach einem der Ansprüche 1 bis 5, dadurch gekennzeichnet, daß der Extrusionskanal (22) einen Endabschnitt aufweist, dessen Wandung zumindest eine Rippe (101, 102, 103) enthält, welche an der Wandung der weiteren Abschnitte dieses Kanals nicht vorgesehen ist und dazu dient, an der Außenkontur (57) des Profilteils eine Rinne (54a, 54b, 54c) zu bestimmen, an der die Außenschicht weggelassen ist.

7. Vorrichtung nach einem der Ansprüche 1 bis 6, dadurch gekennzeichnet, daß sie einen dritten Einlaßkanal (214) enthält, der mit einem dritten geschmolzenen Kunststoffmaterial (213) durch eine dritte Strangpresse (218) gespeist wird, einen Einlauf (228) hat und ein Auslaßende (230) aufweist, das mit dem Extrusionskanal (122) nach dem Anschlußbereich des Auslaßendes (130) des zweiten Einlaßkanals (114) verbunden ist, welcher dritte Einlaßkanal (214) eine dem zweiten Einlaßkanal ähnliche Konfiguration hat.

8. Vorrichtung nach Anspruch 7, dadurch gekennzeichnet, daß, sei n eine ganze Zahl größer als 1, sie n+1 Einlaßkanäle aufweist, welche neben dem ersten und dem zweiten Einlaßkanal (112, 114) n-1 weitere Einlaßkanäle (214) enthalten, deren Gestalt derjenigen des zweiten Einlaßkanals ähnlich ist und deren Auslaufenden jeweils nacheinander in stromabwärts laufender Richtung mit dem Extrusionskanal (122) verbunden sind.

9. Verfahren zur Herstellung eines Hohlprofilteils (50) mit einer Außenkontur (52), die im Querschnitt eine Mehrzahl von Segmenten (52a, 52b, 52c) aufweist, und mit einem Innenteil (56) aus einem ersten Kunststoffmaterial und zumindest einer Außenschicht (57), die aus einem zweiten Kunststoffmaterial hergestellt ist, dadurch gekennzeichnet,
daß eine Vorrichtung nach einem der Ansprüche 1 bis 8 vorgesehen wird, daß mit Hilfe der ersten Strangpresse (16, 116) der erste Einlaßkanal (12, 112) mit dem ersten geschmolzenen Kunststoffmaterial (11, 111) gespeist wird, man das Fließen dieses ersten geschmolzenen Kunststoffmaterials in dem Zwischenkanal (20, 120) und in dem Extrusionskanal (22, 122) realisiert, um den Innenbereich des Hohlprofils zu extrudieren, und mit Hilfe zumindest der zweiten Strangpresse (18, 118; 218) zumindest der zweite Einlaßkanal (14, 114, 214) mit zumindest dem zweiten geschmolzenen Kunststoffmaterial (13, 113; 213) gespeist wird und man das Fließen dieses zweiten Kunststoffmaterials in dem Extrusionskanal im Innenbereich des Profilteils realisiert, um in diesem Innenbereich die Außenschicht dieses Teils zu extrudieren.
